(19) **Europäisches Patentamt European Patent Office Office européen des brevets**

(11) **EP 1 742 016 B1**

(12) **EUROPEAN PATENT SPECIFICATION**

(45) Date of publication and mention of the grant of the patent:
**22.10.2008 Bulletin 2008/43**

(51) Int Cl.:
**G01B 11/24** *(2006.01)*

(21) Application number: **06013734.6**

(22) Date of filing: **03.07.2006**

(54) **Apparatus and method for inspecting screw portions**

Vorrichtung und Verfahren zur Überprüfung von Gewinden

Appareil et procédé d'inspection de filetages

(84) Designated Contracting States:
**DE**

(30) Priority: **04.07.2005 JP 2005195135**

(43) Date of publication of application:
**10.01.2007 Bulletin 2007/02**

(73) Proprietor: **FANUC LTD**
**Minamitsuru-gun,**
**Yamanashi 401-0597 (JP)**

(72) Inventors:
- **Ban, Kazunori**
  **Minamitsuru-gun**
  **Yamanashi 401-0304 (JP)**
- **Warashina, Fumikazu**
  **Oshino**
  **Minatmitsuru**
  **Yamanashi 401-0511 (JP)**
- **Ando, Toshiyuki**
  **mura**
  **Minatmitsuru-gun**
  **Yamanashi 401-0511 (JP)**

(74) Representative: **Thum, Bernhard**
**Wuesthoff & Wuesthoff**
**Patent- und Rechtsanwälte**
**Schweigerstrasse 2**
**81541 München (DE)**

(56) References cited:
**EP-A- 1 544 605**        **DE-A1- 4 209 417**
**US-A- 4 315 688**

- **PATENT ABSTRACTS OF JAPAN vol. 2003, no. 12, 5 December 2003 (2003-12-05) -& JP 2003 248813 A (ROZEFU TECHNOL:KK), 5 September 2003 (2003-09-05)**
- **LALIGANT O ET AL: "Wavelets transform in artificial vision inspection of threading" INDUSTRIAL ELECTRONICS, CONTROL, AND INSTRUMENTATION, 1993. PROCEEDINGS OF THE IECON '93., INTERNATIONAL CONFERENCE ON MAUI, HI, USA 15-19 NOV. 1993, NEW YORK, NY, USA,IEEE, 15 November 1993 (1993-11-15), pages 513-518, XP010108996 ISBN: 0-7803-0891-3**

Printed by Jouve, 75001 PARIS (FR)

**Description**

BACKGROUND OF THE INVENTION

1. Field of the Invention

The present invention relates to an apparatus for inspecting, by image processing, a screw portion provided in an object. The present invention also relates to a method for inspecting, by image processing, a screw portion provided in an object.

2. Description of the Related Art

In manufacturing systems, it is known that image data regarding the working environment of workpieces, peripheral equipment and the like are obtained and subjected to appropriate image processing, in order to improve production efficiency and safety. For example, in an automobile production line, in a case where a welding process is performed to secure a nut to a sheet metal member constituting an automobile body for attaching various other parts to the member, it is necessary to inspect whether the nut is properly secured at a desired position on the sheet metal member, before proceeding to the process of attaching other parts. In this case, when two-dimensional data of a specific region on the sheet metal member, to which the nut is to be secured, is obtained and subjected to appropriate image processing, it is possible to detect the existence of the nut in the specific region. A manufacturing system of this type can be constructed, for example, by using a robot system having an image processing function.

In the nut welding process described above, the nut is welded to the sheet metal member in a state where an internal thread of the nut is aligned substantially coaxially with a through hole previously formed for the nut in the sheet metal member. In this case, typically, the through hole in the sheet metal member is formed to have a diameter somewhat larger than the diameter of the internal thread of the nut. In the conventional nut inspection method to inspect whether the nut is secured properly to the sheet metal member by image processing, an imaging (or image pick-up) device is first disposed in an orientation such that the optical axis of the device is orthogonal to the sheet metal surface (i.e., parallel to a center axis of the through hole for the nut), to observe, and pick up the image of, the through hole for the nut in the sheet metal member from a position in front of the through hole. Then, the diameter of the hole in the picked-up image is measured by the image processing and, based on the measured diameter of the hole (i.e., based on a difference between the diameters of the through hole and the nut internal thread), it is judged whether the nut is properly secured to the sheet metal member.

In the conventional nut inspection method described above, the difference in diameters between the through hole formed in the sheet metal member and the internal thread of the nut is typically very small and, therefore, in order to improve inspection accuracy, a field of view of the imaging device has to be made narrow to such an extent as to enable the difference in the hole diameters measured by the image processing to be distinguished clearly. On the other hand, the automobile body may have an area in which a plurality of nuts are welded to a single sheet metal member, and, in order to inspect the existence of the plurality of nuts on the sheet metal member by the imaging device having the narrowed field of view, it may be required to provide separate imaging devices one by one in front of the respective through holes for the nuts. In this case, in order to detect the existence of the nuts relating to all through holes for the nuts, it is necessary to provide the same number of imaging devices as the number of through holes for the nuts and, therefore, the cost of the manufacturing system may increase. Alternatively, a robot provided with a single imaging device may be introduced into the manufacturing system, and the single imaging device may pick up the images of the plurality of through holes for the nuts one by one while operating the robot, so as to sequentially inspect the existence of the nuts for all through holes. However, in this technique, it takes time to operate the robot and thus to inspect all through holes for the nuts, which may result in an increased cycle time for production.

As described above, in the conventional nut inspection method using image processing, it is difficult to reduce the time required for the inspection while maintaining inspection accuracy. Therefore, in an actual automobile production line, an operator sometimes visually inspects the existence of the nut. In this connection, the above problems in the inspection of an imaged object using the image processing would also appear, for example, in a tapping process using a machine tool, when it is to be determined whether an internal thread is properly formed in a material by using the image processing. More specifically, the conventional inspection method for the internal thread formed by a tapping tool is configured such that an imaging device with an optical axis disposed parallel to a center axis of the internal thread is provided to pick up an image of the internal thread from a position in front of the internal thread, so as to inspect whether the internal thread is properly formed, based on a slight change in the diameter of the internal thread in the picked-up image. Thus, in order to accurately judge the slight change, a field of view of the imaging device also has to be made narrow. Therefore, it is desired to permit the inspection of whether a screw portion, configured by a nut and a through hole for the nut or by an internal thread formed by a tapping process, is in a proper condition (i.e., whether the nut is properly secured, whether the internal thread is properly formed, and so on), to be automatically performed with high accuracy and in a short time.

An inspection device and a method to inspect the number of threads or the thread depth of a tap hole by image processing is known from JP 2003248813. This device is provided with a camera and a lightening device which are used to pick up an image of a tap hole's thread. An image processor performs one of two programmes according to the purpose of the inspection, one programme for counting the luminescent spots in order to inspect the number of threads and the other programme for measuring the length of the bright line, produced by the luminescent spots, in order to inspect the thread depth.

EP 1 544 605 A shows a similar device and method for checking a thread of a fastener for damage. The device comprises a number of cameras, a lightening device and an image processing unit with a judging section to judge on basis of the taken pictures whether the inspected thread is damaged or not.

## SUMMARY OF THE INVENTION

It is an object of the present invention to provide an apparatus for inspecting, by image processing, a screw portion provided in an object, which can detect, with high accuracy and in a short time, whether the screw portion is in a proper condition and can thus prevent the cost of a manufacturing system from increasing.

It is another object of the present invention to provide a method for inspecting, by image processing, a screw portion provided in an object, which can determine, with high accuracy and in a short time, whether the screw portion is in a proper condition and thus can prevent the cost of a manufacturing system from increasing.

To accomplish the above object, the present invention provides a screw portion inspection apparatus, comprising an imaging section for picking up an image of a region, including a screw portion, in an object along a direction inclined with respect to a center axis of the screw portion, and obtaining a two-dimensional image of the object; an image processing section for subjecting image data of the screw portion in the two-dimensional image obtained by the imaging section to a filtering process including an edge detection process; and a thread judging section for extracting edge data as pixels with a density gradient larger than a predetermined threshold in said screw portion obtained by said edge detecting process from output image data of said screw portion resulting from said filtering process, and for judging whether a thread exists in the screw portion, based on an amount of information in said edge data.

The above-described screw portion inspection apparatus may further include a light projecting section for illuminating the screw portion with light in a direction substantially identical to the direction for picking up the image of the region in the object by the imaging section.

The screw portion may be configured by a hole provided in the object and a nut adapted to be secured to the object with an internal thread thereof being aligned with the hole, and the thread judging section may judge whether the thread exists in said screw portion based on said output image data, the thread judging section may also judge whether the nut with said internal thread is properly secured to the object based on the output image data of the screw portion.

The present invention also provides a screw portion inspection method, comprising picking up an image of a region, including a screw portion, in an object along a direction inclined with respect to a center axis of the screw portion, and obtaining a two-dimensional image of the object; subjecting image data of the screw portion in the two-dimensional image as obtained to a filtering process including an edge detection process; extracting edge data as pixels with a density gradient larger than a predetermined threshold in said screw portion by said edge detection process from output image data of said screw portion resulting from said filtering process; and judging whether a thread exists in the screw portion, based on an amount of information.

## BRIEF DESCRIPTION OF THE DRAWINGS

The above and other objects, features and advantages of the present invention will become more apparent from the following description of preferred embodiments in connection with the accompanying drawings, wherein:

Fig. 1 is a functional block diagram showing a basic configuration of a screw portion inspection apparatus according to the present invention;
Fig. 2 is an illustration schematically showing one step in a screw portion inspection method performed by the screw portion inspection apparatus of Fig. 1;
Fig. 3 is an illustration schematically showing a configuration of a screw portion inspection apparatus according to an embodiment of the present invention;
Fig. 4 is an illustration schematically showing one step in a screw portion inspection method, according to an embodiment of the present invention, which is performed by the screw portion inspection apparatus of Fig. 3;
Fig. 5 is an illustration schematically showing another step in the screw portion inspection method according to an embodiment of the present invention; and

Fig. 6 is a flow chart showing a thread judgment procedure in the screw portion inspection method according to an embodiment of the present invention.

DETAILED DESCRIPTION

The embodiments of the present invention are described below in detail, with reference to the accompanying drawings. In the drawings, the same or similar components are denoted by common reference numerals.

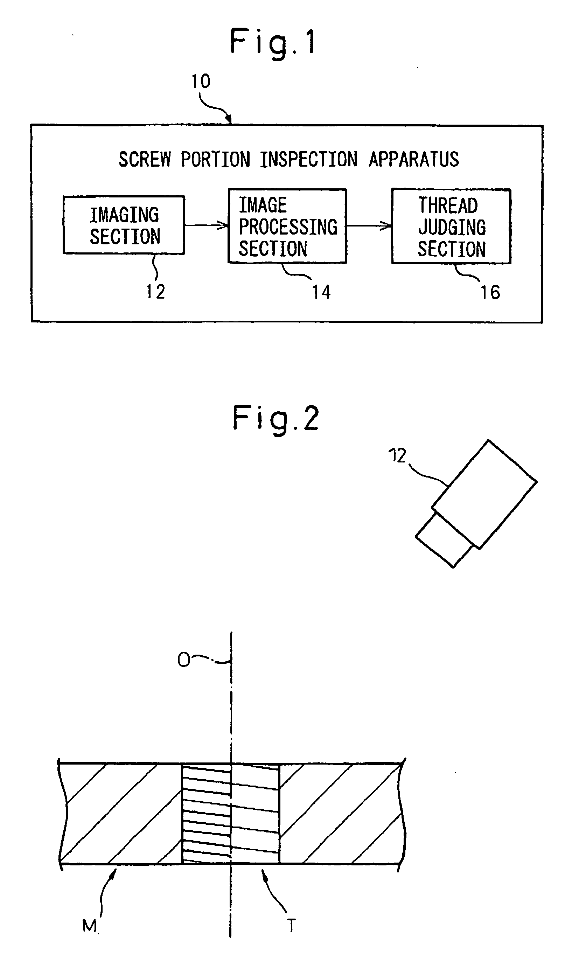

Referring to the drawings, Fig. 1 is a functional block diagram showing a basic configuration of a screw portion inspection apparatus 10 according to the present invention, and Fig. 2 is an illustration schematically showing one step in a screw portion inspection method using the screw portion inspection apparatus 10. The screw portion inspection apparatus 10 has a configuration for inspecting a screw portion T provided in an object M by image processing, and includes an imaging (or image picking-up) section 12 for picking up an image of a region, including the screw portion T, in the object M along a direction inclined with respect to a center axis O of the screw portion T, and obtaining a two-dimensional image of the object M; an image processing section 14 for subjecting the image data of the screw portion T in the two-dimensional image obtained by the imaging section 12 to a filtering process; and a thread judging section 16 for judging whether a thread exists in the screw portion T, based on the output image data of the screw portion T, resulting from the filtering process.

In the screw portion inspection apparatus 10 configured as described above, the imaging section 12 operates to pick up the image of the region including the screw portion T in the object M along a viewing direction inclined with respect to the center axis O of the screw portion T, so that it is possible to obtain the two-dimensional image data of a thread ridge (i.e., a crest and a valley) of the screw portion T (or an internal thread, in Fig. 2). Then, the image processing section 14 operates to subject the obtained image data to the filtering process, so that it is possible to obtain the output image data in which the image of both or one of the crest and valley of the thread ridge is more clear (i.e., the contrast in brightness is enhanced). When the thread judging section 16 judges that the image of both or one of the crest and valley of the thread ridge is picked-up, the thread judging section 16 can determine that the thread exists in the screw portion T. According to this configuration, even if the image of the screw portion T picked-up by the imaging section 12 is small, it is possible to detect the existence of the thread ridge with high accuracy, and thus to use an imaging section 12 with a larger angle of view. As a result, it is possible to simultaneously observe and inspect a plurality of screw portions through a single image pick-up operation by a single imaging section 12. Therefore, it is possible to inspect, with high accuracy and in a short time, whether the plurality of screw portions are in a proper condition (e.g., whether nuts are accurately welded in a plurality of screw portions provided in a sheet metal member for an automobile) and thus to prevent the cost of a manufacturing system from increasing.

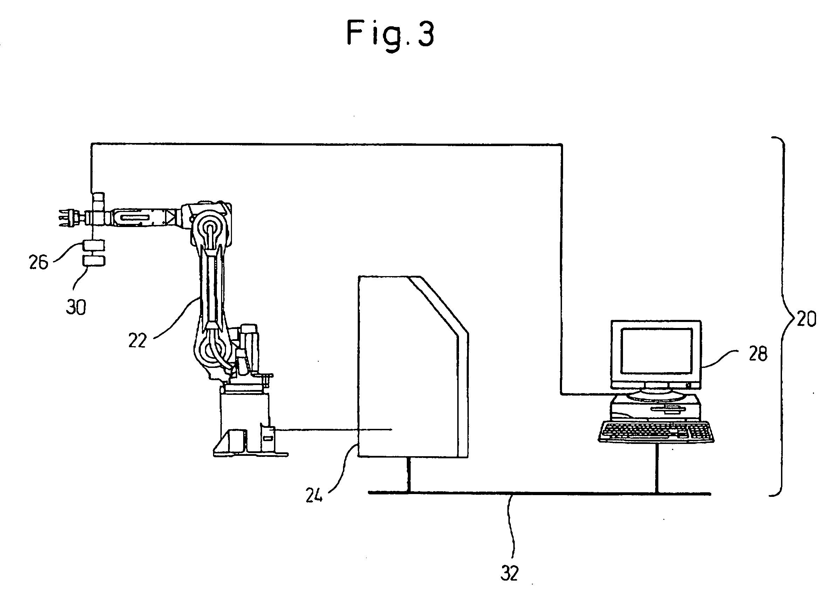

Fig. 3 schematically shows a configuration of a screw portion inspection apparatus 20 according to an embodiment of the present invention and having the basic configuration described above. The screw portion inspection apparatus 20 according to the illustrated embodiment adopts a robot system having an image processing function, and includes an articulated-type robot mechanical section 22 (hereinafter referred to simply as a robot 22); a robot controller 24 connected to the robot 22 for controlling the operation of the robot 22; an imaging (or image picking-up) device 26 mounted to a wrist portion of the robot 22; and an image processor 28 connected to the imaging device 26 for controlling the operation of the imaging device 26. An illumination unit 30 is also mounted to the wrist portion of the robot 22 at a location adjacent the imaging device 26, the operation of the illumination unit 30 being controlled by the robot controller 24 (or the image processor 28). The image processor 28 is connected to the robot controller 24 via a communication cable 32, and operates, due to a command from the robot controller 24, to make the imaging device 26 obtain the image data, to perform a predetermined image processing for the obtained image data, and to transfer the processing results (or output image data) to the robot controller 24.

The imaging device 26 and the image processor 28, in the screw portion inspection apparatus 20, correspond respectively to the imaging section 12 and the image processing section 14 in the screw portion inspection apparatus 10 of Fig. 1. Further, the robot controller 24 or the image processor 28, in the screw portion inspection apparatus 20, can have the function of the thread judging section 16 in the screw portion inspection apparatus 10 of Fig. 1.

The illumination unit 30 in the screw portion inspection apparatus 20 acts as a light projecting section for illuminating the screw portion T with light in a direction preferably substantially identical to a viewing direction for picking up the image of a region including the screw portion T in the object M by the imaging device 26. When the illuminating apparatus 30 is used, the contrast of the two-dimensional image of the screw portion T (i.e., a distinction between light and dark in the crest and valley of a thread ridge) picked-up by the imaging device 26 can be effectively enhanced and, therefore, it is possible to more accurately detect the screw portion T. Further, the screw portion can be inspected stably without being affected by the environment of the screw portion inspection apparatus 20.

The illumination unit 30 may be configured by, for example, a coaxial incident type illumination unit using an LED (a light emitting diode), a direct illuminating type illumination unit using a ring-shaped LED, and the like. Even when the illumination unit 30 configured typically by using an electric lamp is arranged in the neighborhood of the imaging device 26, there is no problem in practical use. Moreover, it is possible to omit the illumination unit 30, so that the two-dimensional image data of the screw portion T is obtained and the screw portion T is inspected through the filtering process only with the help of natural light or indoor light in the environment of the screw portion inspection apparatus 20.

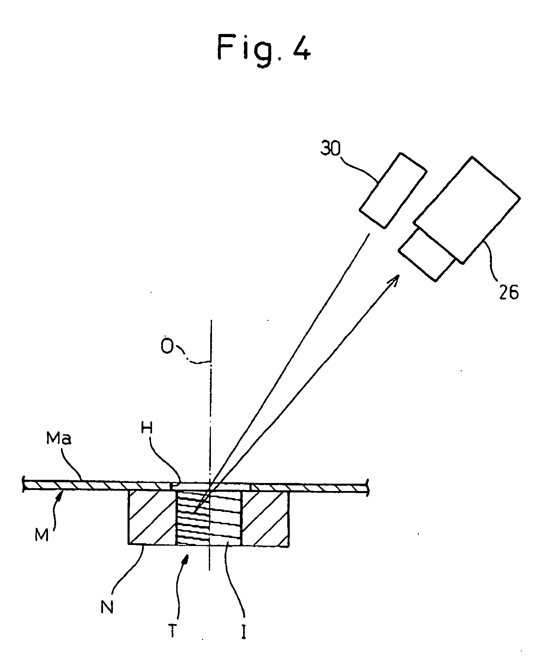

An embodiment of a screw portion inspection method, according the present invention, performed by the screw portion inspection apparatus 20, will be described below with reference to Figs. 4 to 6. In the illustrated embodiment, the screw portion T is composed of a hole (or a through hole) H provided in the object M, and a nut N adapted to be secured to the object M with the internal thread I thereof being generally coaxially aligned with the hole H. The object M is, for example, a sheet metal member constituting an automobile body, and a plurality of screw portions T (i.e., holes H and nuts N) may be provided in a single sheet metal member.

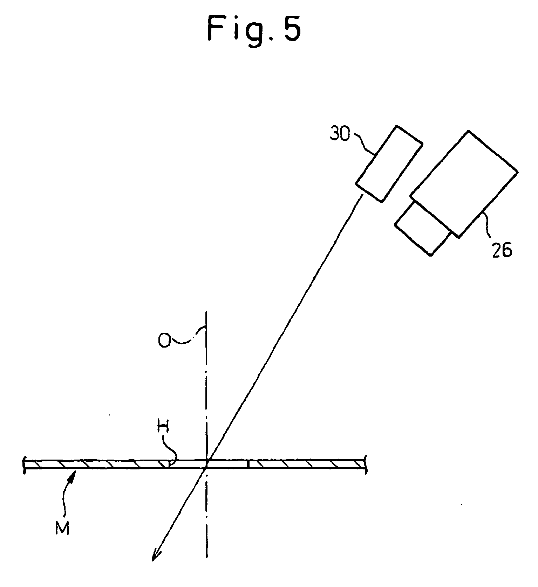

The imaging device 26 operates to pick up the image of a region, including the screw portion T, in a surface Ma of the object M along a viewing direction inclined with respect to the center axis O of the screw portion T (or to a line normal to the surface Ma (on the side opposite to the nut N) of the object M), and to obtain a two-dimensional image of the object M. At this time, in the same direction, the illumination unit 30 illuminates the region including the screw portion T in the surface Ma of the object M with light. As a result, in a case where the nut N is properly secured to the object M (Fig. 4), the two-dimensional data regarding an opening edge of the hole H of the object M and the crest and valley of the thread ridge in the internal thread I of the nut N is surely obtained by the imaging device 26. On the other hand, in a case where the nut N is not properly secured to the object M (Fig. 5), the two-dimensional data of the opening edge of the hole H of the object M is surely obtained by the imaging device 26. Then, based on the output image data of the screw portion T, resulting from a filtering process by the image processor 28 as described below, the robot controller 24 or the image processor 28 (Fig. 3), constituting the thread judging section 16 (Fig. 1), judges whether the nut N is secured to the object M with the internal thread I being aligned with the hole H in a generally coaxial manner.

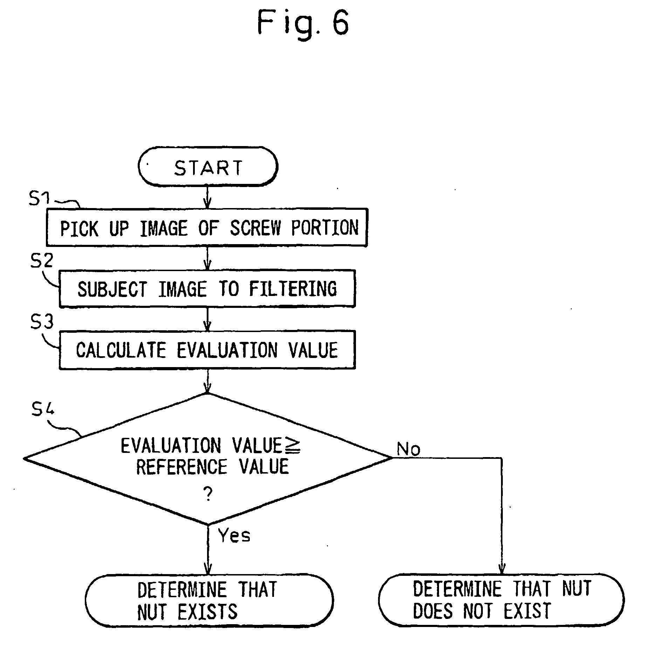

The above-described screw portion inspection method performed by the screw portion inspection apparatus 20 will be described, in more detail below, with reference to the flow chart shown in Fig. 6.

First, in step S1, the image processor 28 allows the imaging device 26 to pick up the image of the region including the screw portion T in the surface Ma of the object M, and thereby obtains the two-dimensional image of the object M. Next, in step S2, the image processor 28 operates to subject the obtained two-dimensional image to a filtering process. In this connection, the imaging device 26 observes the screw portion T in an inclined direction, so that the image data of the hole H and the internal thread I, which should be subject to the filtering process, has an elliptical contour as viewed on a screen.

The object M may be provided with various holes or the equivalents thereof, other than the screw portion T. Therefore, it is necessary to identify the image data of the hole H and the internal thread I, which should be subjected to the filtering process. To this end, an operator may previously set the positions and dimensions of a plurality of elliptical contours on the screen displaying the image from the imaging device 26, and may input the set positions and dimensions to the image processor 28. Alternatively, an additional image processing function may be provided to extract the data of the elliptical contour of the hole H and the internal thread I from the actual imaging data on the screen, and to identify the image corresponding to the extracted data as the image subject to the filtering process. The latter technique may appropriately deal with a case where the position and dimension of the screw portion T on the screen varies due to the fluctuation of the distance between the imaging device 26 and the object M.

The filtering process performed by the image processor 28 includes an edge detection process. In this case, the output image data obtained by the filtering process includes edge data of the screw portion T. Filters referred to as Roberts, Sobel, Laplacian, or the like, filters may be employed as the filter for the edge detection process.

Next, in step S3, the thread judging section (i.e., the robot controller 24 or the image processor 28) extracts the edge data obtained by the edge detection process, from the output image data through the filtering process, and acquires, by calculation, an evaluation value for the judgment of an amount of information of the edge data (e.g., a total number or a total area of pixels for displaying the edge). A proportion of the edge to the area of the obtained screw portion T on the screen may be used as the evaluation value. For example, pixels with a density gradient (i.e., a varying rate between light and shade) larger than a predetermined threshold value are considered as the pixels of the edge image, to calculate the evaluation value by the following formula:

```
[evaluation value] = [the number of pixels with
density gradient larger than threshold] / [the total
number of pixels of image of screw portion T]
```

Then, in step S4, the evaluation value described above is compared with a predetermined reference value. If the nut N is properly secured to the object M (Fig. 4), the light emitted from the illumination unit 30 is illuminated to the internal thread of the nut N and is diffusely reflected therefrom, and therefore the image data obtained by the imaging device 26 includes data of a plurality of bright elliptic striped patterns corresponding to the thread ridge of the internal thread. In contrast, if the nut N is not properly secured to the object M (Fig. 5), the light emitted from the illumination unit 30 passes through the hole H and, therefore, the image data obtained by the imaging device 26 includes data of a uniformly darkened region as the hole H. Thus, when the evaluation value described above is larger than the predetermined reference value, it is judged that the nut N (i.e., the internal thread) exists and, on the other hand, when the evaluation value is smaller than the reference value, it is judged that the nut N (i.e., the internal thread) does not exist.

As described above, according to the screw portion inspection apparatus 20, remarkable effects described with reference to the screw portion inspection apparatus 10 can also be exhibited. In particular, there is a characteristic advantage such that the number of the imaging devices 26 mounted on the robot 22 and/or the number of actions of the robot 22 in the step of picking up the image of the screw portion T is significantly reduced.

Also, when the edge detection process is performed, as a filtering process, by the image processor 28, it is possible to further improve the inspection accuracy for the screw portion T. In this respect, the thread judging section (i.e., the robot controller 24 or the image processor 28) can stably judge whether the thread ridge exists in the screw portion T on the basis of the amount of information of the edge data obtained through the edge detection process. Moreover, in the screw portion inspection apparatus 20, it is possible to further improve the inspection accuracy for the screw portion T by illuminating the screw portion T with light. The screw portion inspection apparatus 20 configured as described above can automatically judge, by image processing, whether the nut N is secured to the object M with the internal thread I being aligned with the hole H.

While the invention has been described with reference to specific preferred embodiments, it will be understood by those skilled in the art that various changes and modifications may be made thereto without departing from the scope of the following claims.

**Claims**

1. A screw portion inspection apparatus (10; 20) for inspecting, by image processing, a screw portion (T) provided in an object (M), the apparatus comprising:

   an imaging section (12; 26) for picking up an image of a region, including said screw portion, in said object along a direction inclined with respect to a center axis (0) of said screw portion, and obtaining a two-dimensional image of said object; **characterized by** further comprising:

   an image processing section (14; 28) for subjecting image data of said screw portion in said two-dimensional image obtained by said imaging section to a filtering process including an edge detection process; and
   a thread judging section (16; 24; 28) for extracting edge data as pixels with a density gradient larger than a predetermined threshold in said screw portion obtained by said edge detecting process from output image data of said screw portion resulting from said filtering process and for judging whether a thread exists in said screw portion, based on an amount of information in said edge data.

2. A screw portion inspection apparatus as set forth in claim 1, further comprising a light projecting section (30) for illuminating said screw portion with light in a direction substantially identical to said direction for picking up said image of said region in said object by said imaging section.

3. A screw portion inspection apparatus as set forth in claim 1 or 2, wherein said screw portion is configured by a hole (H) provided in said object and a nut (N) adapted to be secured to said object with an internal thread (I) thereof being aligned with said hole; and wherein, based on said output image data of said screw portion, said thread judging section judges whether said nut with said internal thread is properly secured to said object.

4. A screw portion inspection method for inspecting, by image processing, a screw portion (T) provided in an object (M), the method comprising the steps of:

   picking up an image of a region, including said screw portion, in said object along a direction inclined with respect to a center axis (O) of said screw portion, and obtaining a two-dimensional image of said object;
   **characterized by** further comprising the steps of:

   subjecting image data of said screw portion in said two-dimensional image as obtained to a filtering process including an edge detection process;
   extracting edge data as pixels with a density gradient larger than a predetermined threshold in said screw portion by said edge detection process from output image data of said screw portion resulting from said filtering process; and

judging whether a thread exists in said screw portion, based on an amount of information in said edge data.

**5.** A screw portion inspection method as set forth in claim 4, further comprising, during the step of picking-up of said image of said region in said object, the step of illuminating said screw portion with light in a direction substantially identical to said direction for picking-up said image of said region in said object.

**6.** A screw portion inspection method as set forth in claim 4 or 5, wherein said screw portion is configured by a hole (H) provided in said object and a nut (N) adapted to be secured to said object with an internal thread (I) thereof being aligned with said hole; and wherein the step of judging whether said thread exists in said screw portion includes a step of judging whether said nut with said internal thread is properly secured to said object, based on said output image data of said screw portion.

**Patentansprüche**

**1.** Schraubabschnittsprüfvorrichtung (10; 20) zum Prüfen eines Schraubabschnitts (T) mittels Bildverarbeitung, der an einem Gegenstand (M) vorgesehen ist, wobei die Vorrichtung aufweist:

einen Bildgebungsabschnitt (12; 26) zum Aufnehmen eines Bildes eines den Schraubabschnitt umfassenden Bereichs an dem Gegenstand entlang einer Richtung, die bezüglich einer Mittelachse (0) des Schraubabschnitts geneigt ist, und zum Erhalten eines zweidimensionalen Bildes des Gegenstands;
**dadurch gekennzeichnet, dass** sie weiter aufweist:

einen Bildverarbeitungsabschnitt (14; 28), um mittels des Bildgebungsabschnitts erhaltene Bilddaten des Schraubabschnitts in dem zweidimensionalen Bild einem Filterverfahren zu unterziehen, das ein Kantenerkennungsverfahren umfasst; und
einen Gewindebestimmungsabschnitt (16; 24; 28), um in dem Schraubabschnitt Kantendaten, die mittels des Kantenerkennungsverfahrens ausgehend von den aus dem Filterverfahren resultierenden Bildausgangsdaten des Schraubabschnitts erhalten wurden, als Pixel mit einem Dichtegradienten zu gewinnen, der größer ist als ein vorbestimmter Schwellenwert, und um basierend auf einer Informationsmenge in den Kantendaten zu bestimmen, ob ein Gewinde in dem Schraubabschnitt existiert.

**2.** Schraubabschnittsprüfvorrichtung gemäß Anspruch 1, die ferner einen Lichtprojektionsabschnitt (30) zum Beleuchten des Schraubabschnitts mit Licht in einer Richtung aufweist, die im wesentlichen identisch mit der Richtung zum Aufnehmen des Bild des Bereichs an dem Gegenstand durch den Bildgebungssabschnitt ist.

**3.** Schraubabschnittsprüfvorrichtung gemäß Anspruch 1 oder 2, wobei der Schraubabschnitt durch eine Öffnung (H) gestaltet ist, die an dem Gegenstand vorgesehen ist, und durch eine Mutter (N), die dazu ausgebildet ist, an dem Gegenstand befestigt zu werden, wobei deren Innengewinde (I) mit der Öffnung fluchtet; und wobei der Gewindebestimmungsabschnitt basierend auf den Bildausgangsdaten des Schraubabschnitts bestimmt, ob die Mutter mit dem Innengewinde richtig an dem Gegenstand befestigt ist.

**4.** Schraubabschnittsprüfverfahren zum Prüfen eines Schraubabschnitts (T) mittels Bildverarbeitung, der an einem Gegenstand (M) vorgesehen ist, wobei das Verfahren die Schritte umfasst:

Aufnehmen eines Bildes eines den Schraubabschnitt umfassenden Bereichs an dem Gegenstand entlang einer Richtung, die bezüglich einer Mittelachse (0) des Schraubabschnitts geneigt ist, und Erhalten eines zweidimensionalen Bildes des Gegenstands;
**dadurch gekennzeichnet, dass** es ferner die Schritte umfasst:

Unterziehen der Bilddaten des Schraubabschnitts in dem zweidimensionalen Bild, wie erhalten, einem Filterverfahren, das ein Kantenerkennungsverfahren umfasst;
Extrahieren von Kantendaten in dem Schraubabschnitt als Pixel mit einem Dichtegradienten, der größer ist als ein vorbestimmter Schwellenwert, mittels des Kantenerkennungsverfahrens ausgehend von den Bildausgangsdaten des Schraubabschnitts, die aus dem Filterverfahren resultieren; und
Bestimmen, ob ein Gewinde in dem Schraubabschnitt existiert, basierend auf einer Informationsmenge in

**EP 1 742 016 B1**

den Kantendaten.

**5.** Schraubabschnittsprüfverfahren nach Anspruch 4, das während des Schritts des Aufnehmens des Bildes des Bereichs an dem Gegenstand weiter den Schritt einer Beleuchtung des Schraubabschnitts mit Licht in einer Richtung aufweist, die im wesentlichen mit der Richtung zum Aufnehmen des Bildes des Bereichs an dem Gegenstand identisch ist.

**6.** Schraubabschnittsprüfverfahren nach Anspruch 4 oder 5, wobei der Schraubabschnitt durch eine Öffnung (H) gestaltet ist, die an dem Gegenstand vorgesehen ist, und durch eine Mutter (N), die dazu ausgebildet ist, an dem Gegenstand befestigt zu werden, wobei deren Innengewinde mit der Öffnung fluchtet; und wobei der auf den Bildausgangsdaten des Schraubabschnitts basierende Schritt des Bestimmens, ob das Gewinde in dem Schraubabschnitt existiert, einen Schritt des Bestimmens umfasst, ob die Mutter mit dem Innengewinde richtig an dem Gegenstand befestigt ist.

**Revendications**

**1.** Dispositif d'inspection de filetage (10 ; 20) destiné à inspecter, par traitement d'image, un filetage (T) prévu dans un objet (M), le dispositif comprenant :

une section d'imagerie (12 ; 26) destinée à prendre une image d'une zone, comprenant ledit filetage, dans ledit objet le long d'une direction inclinée par rapport à un axe central (O) dudit filetage, et à obtenir une image en deux dimensions dudit objet ; **caractérisé en ce qu'**il comprend en outre :

une section de traitement d'image (14 ; 28) destinée à soumettre des données d'image dudit filetage dans ladite image en deux dimensions obtenue par ladite section d'imagerie à un processus de filtrage comprenant un processus de détection des contours ; et
une section d'évaluation de filet (16 ; 24 ; 28) destinée à extraire des données de contours sous forme de pixels avec un gradient de densité supérieur à un seuil prédéterminé dans ledit filetage obtenues par ledit processus de détection des contours à partir des données d'image en sortie dudit filetage résultant dudit processus de filtrage et à évaluer si un filet existe dans ledit filetage, sur la base d'une quantité d'informations dans lesdits données de contours.

**2.** Dispositif d'inspection de filetage selon la revendication 1, comprenant en outre une section de projection de lumière (30) destinée à illuminer ledit filetage avec une lumière dans une direction sensiblement identique à ladite direction destinée à prendre ladite image de ladite zone dans ledit objet par ladite section d'imagerie.

**3.** Dispositif d'inspection de filetage selon la revendication 1 ou 2, dans lequel ledit filetage est formé par un orifice (H) prévu dans ledit objet et un écrou (N) adapté pour être fixé audit objet avec un filet interne (I) de celui-ci étant aligné avec ledit orifice ; et dans lequel, sur la base desdites données d'image en sortie dudit filetage, ladite section d'évaluation de filet évalue si ledit écrou avec ledit filet interne est correctement fixé audit objet.

**4.** Procédé d'inspection de filetage destiné à inspecter, par traitement d'image, un filetage (T) prévu dans un objet (M), le procédé comprenant les étapes consistant à :

prendre une image d'une zone, comprenant ledit filetage, dans ledit objet le long d'une direction inclinée par rapport à un axe central (O) dudit filetage, et obtenir une image en deux dimensions dudit objet ;
**caractérisé en ce qu'**il comprend en outre les étapes consistant à :

soumettre des données d'image dudit filetage dans ladite image en deux dimensions ainsi obtenue à un processus de filtrage comprenant un processus de détection des contours ;
extraire des données de contours sous forme de pixels avec un gradient de densité supérieur à un seuil prédéterminé dans ledit filetage par ledit processus de détection des contours à partir des données d'image en sortie dudit filetage résultant dudit processus de filtrage ; et
évaluer si un filet existe dans ledit filetage, sur la base d'une quantité d'informations dans lesdits données de contours.

**5.** Procédé d'inspection de filetage selon la revendication 4, comprenant en outre, pendant l'étape de prise de ladite

**8**

image de ladite zone dans ledit objet, l'étape d'illumination dudit filetage avec une lumière dans une direction sensiblement identique à ladite direction destinée à prendre ladite image de ladite zone dans ledit objet.

6. Procédé d'inspection de filetage selon la revendication 4 ou 5, dans lequel ledit filetage est formé par un orifice (H) prévu dans ledit objet et un écrou (N) adapté pour être fixé audit objet avec un filet interne (I) de celui-ci étant aligné avec ledit orifice ; et dans lequel l'étape d'évaluation si ledit filet existe dans ledit filetage comprend une étape d'évaluation si ledit écrou avec ledit filet interne est correctement fixé audit objet, sur la base desdites données d'image en sortie dudit filetage.

# Fig.1

10

SCREW PORTION INSPECTION APPARATUS

| IMAGING SECTION | IMAGE PROCESSING SECTION | THREAD JUDGING SECTION |

12    14    16

# Fig.2

12

O

M    T

# Fig.3

EP 1 742 016 B1

# Fig. 4

# Fig.5

# Fig. 6

```
              ┌─────────────┐
              │    START    │
              └─────────────┘
                     │
S1  ┌──────────────────────────────────────┐
    │  PICK UP IMAGE OF SCREW PORTION       │
    └──────────────────────────────────────┘
                     │
S2  ┌──────────────────────────────────────┐
    │  SUBJECT IMAGE TO FILTERING           │
    └──────────────────────────────────────┘
                     │
S3  ┌──────────────────────────────────────┐
    │  CALCULATE EVALUATION VALUE           │
    └──────────────────────────────────────┘
                     │
S4           ╱────────────────╲
            ╱  EVALUATION VALUE≧ ╲        No
           ╱   REFERENCE VALUE    ╲────────────┐
           ╲        ?            ╱              │
            ╲──────────────────╱               │
                     │                         │
                    Yes                        │
     ┌──────────────────────┐    ┌──────────────────────┐
     │  DETERMINE THAT       │    │  DETERMINE THAT NUT  │
     │  NUT EXISTS           │    │  DOES NOT EXIST      │
     └──────────────────────┘    └──────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003248813 B
- EP 1544605 A